# EUROPEAN PATENT SPECIFICATION

(11) **EP 3 462 890 B1**
(45) Date of publication and mention of the grant of the patent: **12.08.2020**
(21) Application number: 17722504.2
(22) Date of filing: 31.03.2017
(51) Int. Cl.: A22C 7/00, A21C 11/10

(54) **DEVICE AND PROCESS FOR PRODUCING SPHERICAL FOOD PRODUCTS**
VORRICHTUNG UND VERFAHREN ZUR HERSTELLUNG VON KUGELFÖRMIGEN NAHRUNGSMITTELN
DISPOSITIF ET PROCÉDÉ POUR PRODUIRE DES PRODUITS ALIMENTAIRES SPHÉRIQUES

(30) Priority: 31.03.2016 BE 165230; 06.10.2016 BE 165743
(43) Date of publication of application: 10.04.2019
(73) Proprietor: SMO bvba, 9900 Eeklo (BE)
(72) Inventor: MOLLET, Sander, 9991 Adegem (BE)
(74) Representative: Brantsandpatents bvba
(86) International application number: PCT/IB2017/051848
(87) International publication number: WO 2017/168378

(56) References cited:
- EP-A1- 0 610 169
- EP-A1- 1 576 883
- EP-A1- 2 789 239
- DE-C- 395 846
- US-A- 2 299 314
- US-A- 3 535 735

## Description

### TECHNICAL FIELD

The present Invention relates to a device for producing spherical food products, In particular to a device for producing meatballs.

### BACKGROUND

Automation in the food industry Is Important amongst other things for guaranteeing the hygiene of the finished products, Therefore, the physical contact between the operator and the food products must be avoided as much as possible. Moreover, the automation serves to increase the productivity. Food products must be able to be prepared In high production and within a limited period of time. An example of such food products are meatballs with a predefined diameter.

For this purpose, the state of the art describes a new meatball device in CN 204014936. The device comprises a double drum with recesses alongside the circumference and a filling device, with which spherical meatballs are formed In a continuous way, Such device however Imposes restrictions as to the cleaning of the device after use and allows only one diameter of meatballs.

WO 2013/104028 A1 describes a device for forming single, separate meatballs, Including the separation of a separate part of a liquid or extrudlble meat product stream by means of at least a separation blade. The separation blade generates a downward force on the meat quantity to seperate the separation of the portion of meat of the meat product stream, for thus forming a meatball.

Other food processing devices suitable for producing shaped items such as balls are known from EP 1 576 883 A1 and from EP 2 789 239 A1.

A further patty forming device for making spherical food products, wherein the device comprises two adjacent shearing blades is known from US 2,299,314. In particular US 2,299,314 discloses that the blades are drivable by means of an eccentric.

The present Invention alms to offer a solution for one or more of the afore-mentioned problems or shortcomings.

### SUMMARY

To this aim, the invention provides in a first aspect a device for producing spherical food products according to claim 1.

In this way, spherical food products can be formed with a perfectly round shape or If desired, a stretched spherical shape. After use, the device can easily be cleaned as the various parts can easily be disassembled.

In a second aspect, the present Invention provides a kit according to claim 11.

In a third aspect, the invention provides a method for producing spherical food products according to claim 12.

In a fourth aspect, the Invention provides a use of a device according to the first aspect, for producing spherical food products, such as for example meatballs.

### DESCRIPTION OF THE FIGURES

The explicit characteristics, advantages and objectives of the present invention will become clear for the skilled worker in the technical field of the Invention after reading the following detailed description of the embodiment of the invention and of the enclosed figures. The figures serve to further Illustrate the invention, without thereby limiting the scope of the invention.
Figures 1 to 4 represent a simplified illustration of a device for producing spherical meatballs.
Figure 1 shows a schematic representation of a device for producing spherical food products In perspective.
Figure 2 shows a plan view of the device with indication of the cross-section A-A.
Figure 3 shows In more detail the cross-section A-A of Figure 2.
Figure 4 shows different bottom views of the device with respectively seven, four and two openings In both blades.
Figure 5 shows a detail of section B from Figure 3 with indication of a clamping ring 18 In a recess 17 In the ground plane 16 of the pressure chamber 2,

### DETAILED DESCRIPTION OF THE INVENTION

Unless otherwise specified, all terms used in the description of the invention, including technical and scientific terms, shall have the meaning as they are generally understood by the skilled worker in the technical field of the Invention. For a better assessment of the description of the invention, the following terms are explicitly explained.

When "approximately" or "about" are used in this document with a measurable quantity, a parameter, a time period or moment, and the like, variations are meant of +/-20% or less, preferably +/-10% or less, more preferably +/-5% or less, even more preferably +/-1% or less, and still even more preferably +/-0.1% or less than and of the cited value, as far as such variations apply to the invention that is described. It should however be understood that the value of the quantity to which the term "approximately" or "about" is used, is itself specified.

In a first aspect, the Invention provides a device for producing spherical food products comprising a pressure chamber that can be connected to a supply line and a shearing system that can be connected to said pressure chamber, in which said shearing system Is comprised of two adjacent shearing blades with one or more openings.

The pressure chamber should be considered as a storage room which is filled with food material from the supply line. The food material itself is typically an extrudible food material, such as for example a fine meat preparation, such as minced meat, pâté, or a vegetable puree or smashed potatoes. Because the shearing system only allows a limited amount of food material to pass through, the food material in the pressure chamber is under a well-defined, constant pre-pressure. In this way, a relatively constant flow rate of food material can be produced in the desired shape. By placing the openings In the respective blades of the shearing system in an appropriate way, a food product with a desired shape can be obtained by the movement of the blades within a well-chosen range. The setting of these parameters, namely the number of openings, shape and size of the openings, the position of the openings in the two shearing blades and the movement of the two shearing blades with respect to each other, allow to achieve the desired shape of the food product in an easy way.

Here, It Is Important that a spherical food product can be formed without any contact between the operator and the food material, under optimal, hygienic circumstances. Moreover, spherical food products can be formed with a round shape or if desired, a stretched spherical shape. The device further allows to switch in an easy way between the production of food products with a different diameter. To that end, the shearing blades can be replaced by blades with larger or smaller openings. After use, the device can be easily cleaned because the various parts can easily be disassembled, as is clear from amongst other things the description below and the attached figures. In this way, no food material stays behind in the tools, as a result of which food decay can be avoided.

Said openings are round, so that a spherical food product can be obtained, Analogously, said openings can be provided angular, such as triangular, square, pentagonal, hexagonal, etc. so that a food product with an angular cross-section can be obtained.

In a preferred embodiment, the invention provides for a device, In which In each position of said shearing blades, the shearing system is not completely closed. This means that in any position of the shearing blades, the shearing system shows a passage through which passage food material can pass through the shearing system. In this way, a too high pressure of the food material is never obtained In the pressure chamber. Such excessive pressure would namely unnecessary load the shearing blades as a result of which wear and possibly blockage of the shearing blades could occur, Such situations should be avoided, preferably by ensuring that the outlet of the pressure chamber can at no moment be fully closed.

When developing smaller embodiments of the device according to the present Invention, the skilled worker will acknowledge that it is very difficult or even impossible to provide the device so that the shearing system Is at any moment during operation not be fully closed, In such cases, or additionally or alternatively to above-said embodiment, one can opt to provide an overpressure valve, or more in general an overpressure system, In the pressure chamber. In a preferred embodiment, the invention provides for a device, in which an overpressure system Is provided at the pressure chamber, more specifically in the upper plane or the wall of the pressure chamber. Thus, food material can leave the pressure chamber in a controlled way so that an overpressure in the pressure chamber is avoided. In this way, the device is protected against possible damage as a result of overpressure In the pressure chamber.

In a preferred embodiment, the invention provides for a device, In which said pressure chamber Is connected to said shearing system via one or more guiding channels. Such guiding channels guide the food material of the pressure chamber to the shearing system, more in particular to the shearing blades. On the one hand, the guiding channels cause separate material flows to the shearing blades, as a result of which food elements can be prepared in parallel, Moreover, the guiding channels ensure a smaller contact surface between the food material in the pressure chamber and the shearing blades. In this way, the pressure on the shearing blades Is reduced, ensuring a better durability of the device,

According to the invention a device is provided in which said shearing blades are connected to an eccentric, which eccentric can be driven by a motor. Said eccentric should be understood as a central axis with a first and a second blade, which blades are located eccentrically around said central axis and In a different position with respect to each other, Said first and second blade Is moreover beared In an opening connected to respectively said first and second shearing blade, or shortly blade. In this way, both shearing blades are connected to said central axis. However, during rotation of the central axis, the respective blades will be located at different distances with respect to the central axis, In this way, both blades can shear with respect to each other, as a result of which the cross-section of the material flow through the openings In the blades varies continuously. Thus, separate food elements can be produced, such as for example meatballs.

In a preferred embodiment, the invention provides for a device, in which said eccentric can be provided for In a detachable way on a motor axis. The eccentric can preferably be provided by means of a tightenable bolt on the rotary axis, which can be driven by a motor, As a result, both the eccentric and the shearing blades and the shearing system are detachable from the pressure chamber and the motor axis. In this way, no bending forces are applied to the rotary axis of the eccentric, thus avoiding material breakage or wear, In an alternative embodiment, said motor axis and said eccentric are made In one piece. This offers the advantage that the parts at the level of their connection points have no spaces along which food material can accumulate or stay behind, resulting in food decay.

In a preferred embodiment, the invention provides for a device, In which said eccentric is comprised in a housing. Such housing offers protection against Impacts on the eccentric, as well as to the operator,

In a preferred embodiment, the invention provides for a device, In which said supply line, said pressure chamber and said shearing system can be disassembled. Above-said parts can be assembled and disassembled by means of a set of internal screws and bolts, by means of a connectable magnet system, or by means of a snap-fit system, In this way, the separate part can easily be cleaned after use before being stored until further use.

In a preferred embodiment, the invention provides for a device, In which said openings of said shearing blades are provided with an angle of 15° to 90°. More preferably, said angle Is comprised between 15° and 60°, still more preferably between 30° and 60°, and most preferably equal to 30°, 35°, 40°, 45°, 50°, 55° or 60°, or any value therein between, This offers the advantage that the openings can sufficiently be cleaned internally after use.

In a preferred embodiment, the invention provides for a device, in which said shearing blades, 3a, 3b, are made of a stainless material, such as for example stainless steel or a plastic material. This offers the advantage that the shearing blades, 3a, 3b, suffer no wear as a result of long-term exposure to the air or mild, oxidative circumstances.

In a more preferred embodiment, a first shearing blade is made of a metal, such as preferably stainless steel (stainless steel or Inox), and a second shearing blade is made of a plastic material, such as preferably polyether ether ketone (PEEK). This offers the advantage that the shearing blades that are crossing each other, suffer less mutual friction, and thus suffer less wear In case of Intensive or long-term use, contrary to two metal shearing blades that are crossing each other. Moreover, the combination of a metal shearing blade and a plastic shearing blade during operation of the device appears to produce significantly less noise. This causes significantly less noise nuisance and a lower risk for the operator to Incur ear damage, especially in case of frequent or long-term use.

In a still more preferred embodiment, said metal shearing blade 3a Is located at the side of the pressure chamber 2, and said plastic shearing blade 3b is located at the opposite side. This offers the advantage that said metal shearing blade 3a can better absorb or resist the Increased pressure In the pressure chamber 2 compared to said plastic shearing blade 3b. Moreover, in such embodiment, the plastic shearing blade 3b moves over the metal ground plane 16 of the shearing system. Here also, the friction, noise nuisance and wear of the moving plastic shearing blade 3b over the metal ground plane 16 is significantly reduced compared to the alternative embodiment, in which two metal shearing blades are used.

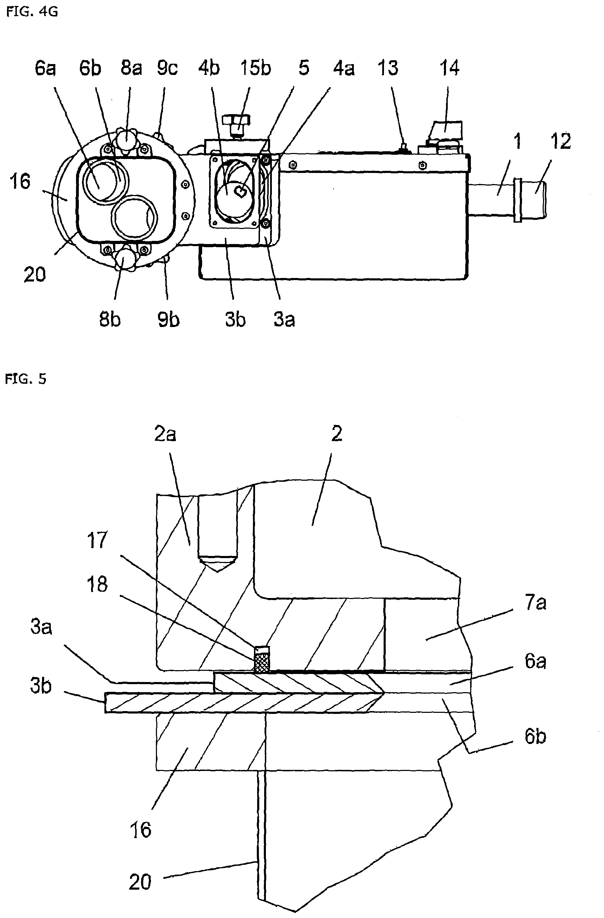

In a preferred embodiment, the Invention provides for a device provided with a clamping ring 18 at the bottom side of the pressure chamber 2. The clamping ring 18 Is provided In a recess 17 In the ground plane of the pressure chamber 2 and is In contact with the upper side of the first shearing blade 3a. When in operation, the pressure of the food material in the pressure chamber 2 causes the shearing blades 3a and 3b to be pushed towards the ground plane 16. As a result, a space can be created between the shearing blade 3a and the ground plane of the pressure chamber. Through this space, food material can consequently escape, which is extremely undesired, The clamping ring 18 thus provides for an adequate solution by blocking leaking food material. This is schematically represented in section B of Figure 5.

In a second aspect, the invention provides a kit for assembling a device according to the first aspect of the Invention, comprising:
- a supply line;
- a pressure chamber that can be connected to said supply line;
- a shearing system that can be connected to said pressure chamber;
In which said shearing system Is comprised of two adjacent shearing blades with one or more openings.

Such kit allows to assemble as well as disassemble the device according to the first aspect of the invention in a simple way after use. This allows to easily clean the various parts, which is of uttermost importance in the food Industry.

In a preferred embodiment, the Invention provides for a kit, comprising two or more shearing systems, Preferably, said two or more shearing systems are provided with a different number of openings in the shearing blades and/or a different size of said openings of the shearing blades, In this way, the operator can easily switch between different sets of shearing blades depending on the desired size of the food products to be prepared.

In a third aspect, the Invention provides a process for producing spherical food products, comprising the steps of:
- supplying a food material under pressure to a pressure chamber,
- guiding food material In said pressure chamber through a shearing system,
in which said shearing system comprises two shearing blades, which are each provided with one or more openings and which shearing blades move adjacently alongside one another In the plane of the shearing system,

Preferably, said food material Is supplied under an essentially constant pressure, so that the configuration of the formed food element can easily be adapted by setting the rotation speed of the eccentric. Both blades can move with respect to each other, so that the size of the passage openings, that is the overlap between respective openings, varies constantly, In this way, spherical food elements can be obtained.

According to the invention a process is provided to in which said shearing blades carry out a harmonic movement. Both blades move with the same speed, however with a different phase with respect to each other. Preferably, both blades move with respect to each other with a phase difference comprised between 90° and 270°, more preferably between 135° and 225°, and most preferably equal to 150°, 160°, 170°, 180°, 190°, 200° or 210°, or any value therein between. Thus, a sufficiently large variation in overlap between the respective openings In said shearing blades Is obtained. Because the blades move harmonically with respect to each other, a perfectly spherical food element can be obtained at the appropriate pressure and speed of the food material.

In a preferred embodiment, the invention provides for a process, In which said openings In said shearing blades at least partially overlap in each position during the harmonic movement. Thus, the pressure chamber is at no time completely closed, thus avoiding temporary pressure Increases and minimizing material breakage or wear. In an additional or alternative embodiment, the Invention provides for a process In which overpressure in the pressure chamber is avoided by means of an overpressure system, more specifically an overpressure valve.

In a fourth aspect, the Invention provides for a use of a device according to the first aspect, for producing spherical food products, such as for example meatballs.

### Example

The invention will now be further explained by means of the following example, without being limited thereto.

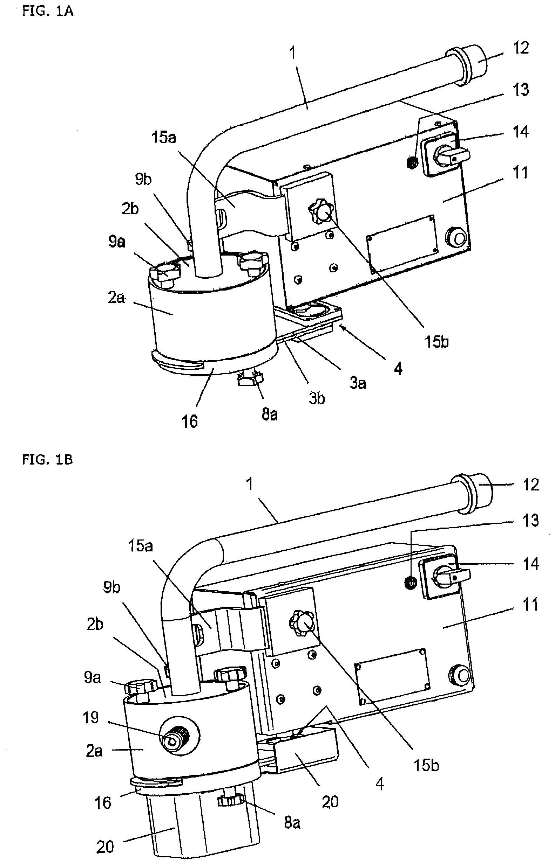

Figure 1A shows a schematic representation of said device in perspective. In the upper part of the figure, a supply line 1 is shown with a connection part 12 at the supply side. The connection part 12 can be connected to an appropriate connection with appropriate diameter corresponding to the supply connection. The supply line 1 ends in the pressure chamber 2. The supply of food material is brought under a predetermined pressure to bring the fine meat preparation to the pressure chamber 2 via the supply line 1. In this way, in the pressure chamber 2, an amount of meat preparation is brought under a predetermined, essentially constant pressure.

Contrary to the supply line 1, the pressure chamber 2 of the device Is open by means of a plurality of guiding channels 7a, 7b, 7c. In use, the open side is closed off by means of a shearing system 3, 6, 8, 16. The shearing system 3, 6, 8, 16 consist of two blades 3a, 3b, in which each blade is provided with a series of openings 6a, 6b. Each blade is connected to an eccentric blade 4a, 4b, in which each eccentric blade 4a, 4b is beared on a drive shaft 5b, driven by means of an electric motor 10. In this way, the two blades 3a, 3b are moved across each other in the plane perpendicular to the drive shaft 5b according to a harmonic movement. The afore-mentioned openings 6a, 6b in said blades 3a, 3b are circular, as a result of which In use, the food material in the pressure chamber 2 can move through the overlap of opening(s) 6a, 6b In the two blades 3a, 3b. The surface of overlap of opening(s) 6a, 6b in the two blades 3a, 3b will vary with the varying position of both blades 3a, 3b. According to the applied pressure in the pressure chamber 2, a spherical or a stretched-spherlcal food preparation will thus be obtained. By adjusting the pressure in the pressure chamber 2 and/or the speed of the electric motor 10, the shape of the obtained meat preparation can be adjusted according to the specific wishes. The speed of the electric motor 10 can be controlled by means of a control button 14, and a switch 13 allows to switch on and off the electric motor 10.

In a preferred embodiment, the speed of motor 10 cannot be adjusted and the shape of the product is set by adjusting the pressure In the pressure chamber 2, Thus, control button 14 is a two-position cam switch by means of which the motor can be switched `ON' or `OFF' and switch 13 is a thermal safety switch that must prevent overloading and eventually burning out of the motor.

The supply line 1 is attached with respect to the actuator housing 11 by means of a connection part 15a. In this way, the assembly consisting of the whole of supply line 1, pressure chamber 2 and shearing system 3, 4, 5, 6, 8, 16 can be meticulously assembled, so that a good operational safety can be guaranteed. At the same time, the parts can easily be disassembled, as a result of which the parts can be cleaned separately from each other after use.

Figure 1B shows an embodiment of the invention according to Figure 1A, in which a protection 20 is mounted on the ground plane 16 of the pressure chamber 2. This protection 20 ensures that the shearing blades 3a, 3b and the eccentric 4a, 4b are protected for the operator In order to avoid work accidents. Figure 1B also shows an overpressure system 19 to avoid overpressure in the pressure chamber 2 during the operation of the device, The overpressure system 19 is provided In the wall 2a of the pressure chamber 2 to evacuate an amount of food material along the overpressure system 19 in a controlled way in case of a too high pressure in the pressure chamber 2. The overpressure system 19 Is comprised of an opening in the wall 2a, which opening is closed off by means of a pen that is enclosed by a spring. In case of a pressure that is too high, the spring is pressed and the opening is released from the pen In order to allow the passage of food material. Thus, damage resulting from overpressure in the pressure chamber 2 can be avoided.

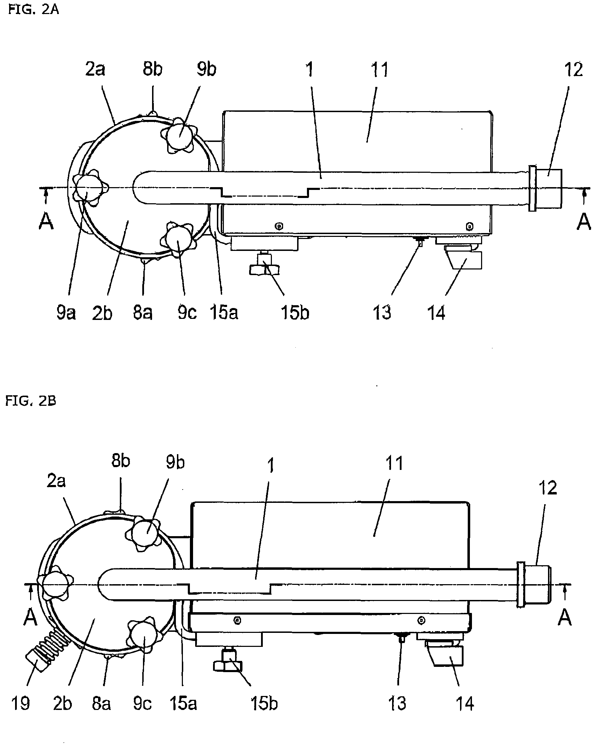

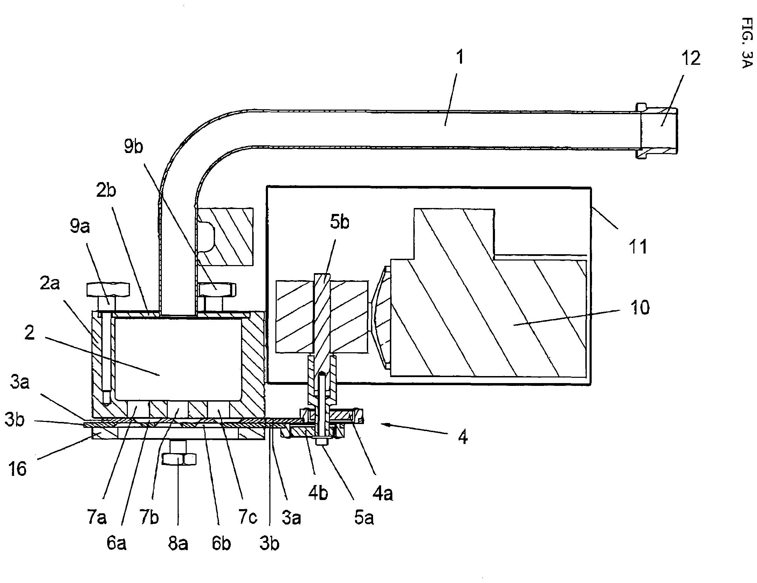

Figure 2A shows a plan view of the device with indication of the cross-section A-A. Figure 2B shows an embodiment of the Invention according to Figure 2A, in which an overpressure system 19 is provided in the wall 2a of the pressure chamber 2. Figure 3A shows In further detail the cross-section A-A. On the right in Figure 3A, an electric motor 10 Is shown which Is driving a drive shaft 5b. At the free end, the drive shaft 5b is provided with an eccentric 4, which can possibly be protected by means of a protection cap. The eccentric 4 is formed by two circular discs 4a, 4b, which are provided eccentrically on the drive shaft 5b and that are connected respectively with a first 3a and a second blade 3b. The eccentric 4 can be tightened or released by means of a tightenable bolt 5a,

On the left on Figure 3A, at the bottom, two adjacent blades 3a, 3b are provided with multiple openings 6a, 6b. The blades 3a, 3b are enclosed by means of a ground plane 16 that Is tightened by means of easily tightenable bolts 8a, 8b. By this, the closing plane and the blades 3a, 3b can be disconnected for cleaning. Furthermore, Figure 3A shows guiding channels 7a, 7b, 7c of the pressure chamber 2 up to the two shearing blades 3a, 3b. The guiding channels 7a, 7b, 7c ensure a good supply of food material without thereby increasing too much the shear stress between food material and blades 3a, 3b, causing additional material load.

The openings 6a, 6b In the shearing blades 3a, 3b are provided with oblique walls with the sharp side of the openings 6a, 6b oriented towards each other, for obtaining a good cutting-off. The angle of the opening walls is 45° with respect to the plane of the blades 3a, 3b. Furthermore, the location of the openings 6a, 6b In the blades 3a, 3b Is chosen In such way that during a complete rotation of the eccentric, the plane formed by the two blades 3a, 3b Is not closed completely at any time. In this way, it can be avoided that during a continuous supply of food material, the pressure In the pressure chamber 2 becomes too high, as a result of which process interruptions can occur as a result of a too high pressure on the blades 3a, 3b.

Figure 3A further shows at the top that the pressure chamber 2 can be easily formed by means of a wall 2a and upper plane 2b which can be assembled by means of bolts 9a, 9b, 9c, In this way, the pressure chamber 2 can also easily be cleaned after use. The supply line 1 connects to an opening in the upper plane 2b of the pressure chamber 2.

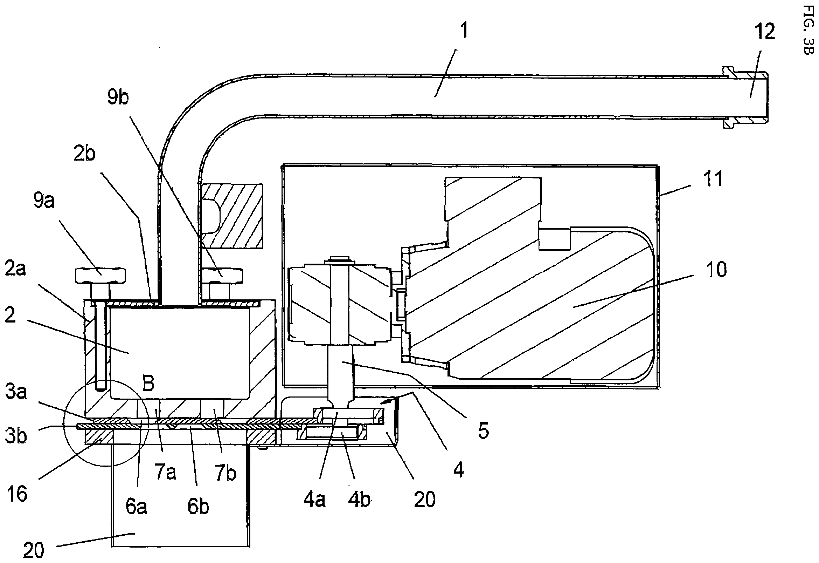

Figure 3B shows an embodiment of the invention according to Figure 3A, In which a protection 20 is mounted on the ground plane 16 of the pressure chamber 2. The protection 20 encloses both the outlet openings 6a, 6b of the shearing blades 3a, 3b and the eccentric 4a, 4b. Figure 3B also shows that the motor axis and the axis of the eccentric can be provided out of one axis 5. In Figure 3B, section B is also indicated, of which more details are shown In Figure 5.

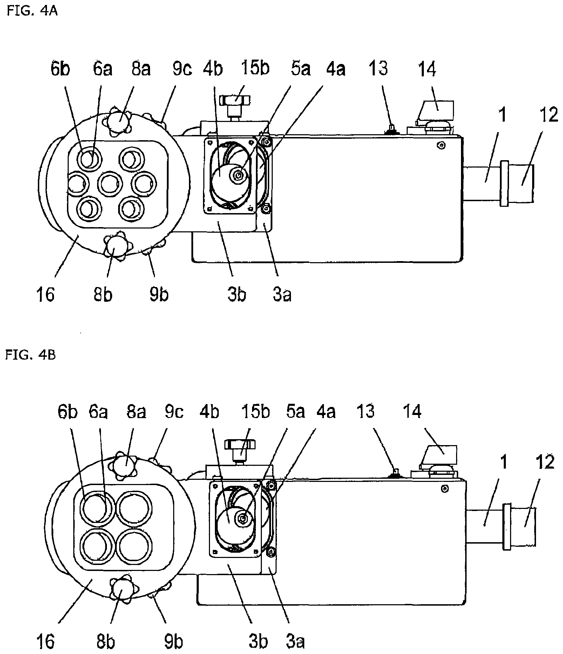

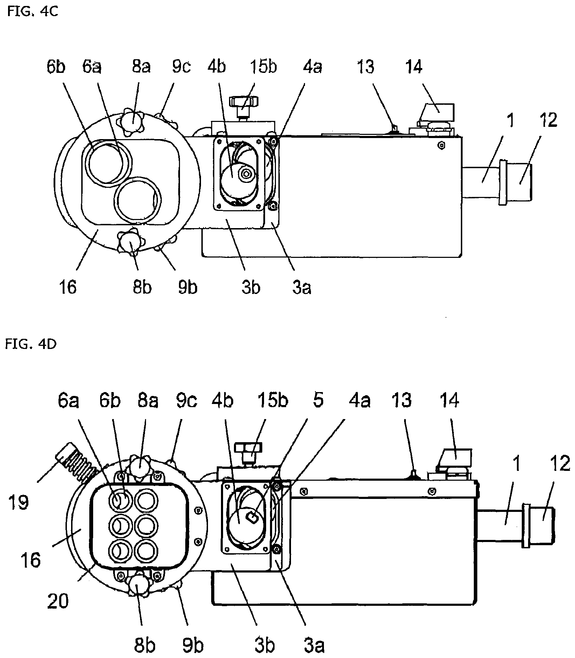

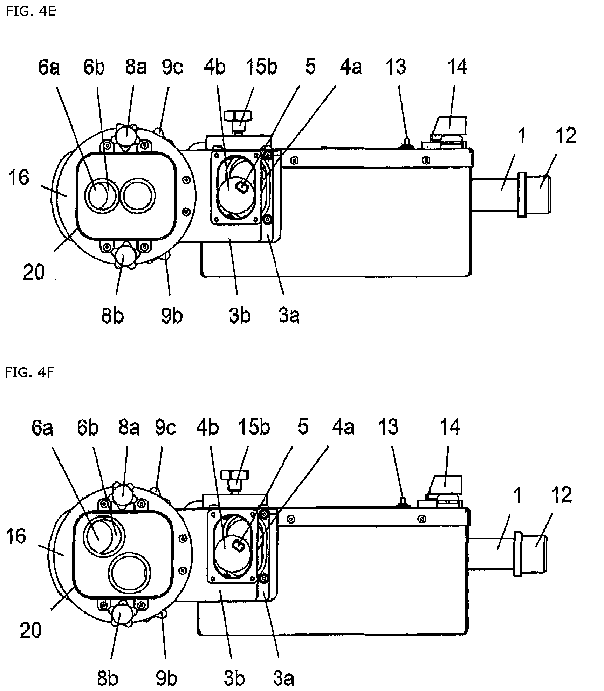

Figure 4 shows several bottom views of the devices in different embodiments. Figure 4A shows an embodiment with seven openings 6a, 6b in both blades 3a, 3b; Figure 4B shows an embodiment with four openings 6a, 6b In both blades 3a, 3b; Figure 4C shows an embodiment with two openings 6a, 6b in both blades 3a, 3b; Figure 4D shows an embodiment with two openings 6a, 6b in both blades 3a, 3b, In which the overpressure system 19 and the protection 20 are shown; Figure 4E shows an embodiment with two openings 6a, 6b in both blades 3a, 3b, In which the overpressure system 19 and the protection 20 are shown; Figure 4F shows an embodiment with two openings 6a, 6b In both blades 3a, 3b, in which the overpressure system 19 and the protection 20 are shown; Figure 4G shows an embodiment with two openings 6a, 6b in both blades 3a, 3b, In which the overpressure system 19 and the protection 20 are shown;. The number of openings 6a, 6b allows to make multiple food preparations In a parallel way. When it is desired to make food with a larger diameter, a larger diameter will have to be chosen for the openings 6a, 6b, as a result of which a smaller number of openings 6a, 6b is possible within the cutting face of the shearing blades 3a, 3b.

Figure 5 schematically shows a detail of section B in Figure 3B. The clamping ring 18 is provided in a recess 17 In the ground plane 16 of the pressure chamber 2 and is in contact with the upper side of the first shearing blade 3a. When In operation, the pressure of the food material in the pressure chamber 2 causes the shearing blades 3a and 3b to be pushed towards the ground plane 16. As a result, a space can be created between the shearing blade 3a and the ground plane of the pressure chamber. Through this space, food material can consequently escape, which Is extremely undesired. The clamping ring 18 thus provides here an adequate solution by blocking leaking food material.

## Claims

1. Device for producing spherical food products comprising a pressure chamber (2) that can be connected to a supply line (1) and a shearing system (3, 6) that can be connected to said pressure chamber (2), wherein
said shearing system is comprised of two adjacent shearing blades (3a, 3b), each comprising one or more round openings (6a, 6b), wherein said adjacent shearing blades (3a, 3b) are moveable with respect to each other, **characterized in that** each shearing blade (3a, 3b) is connected to an eccentric (4a, 4b), and each eccentric (4a, 4b) can be driven by a motor.

2. Device according to claim 1, wherein said pressure chamber (2) connects to said shearing system (3, 6) via one or more guiding channels (7a, 7b, 7c).

3. Device according to claim 1-2, wherein in each position of said eccentric (4a, 4b), the shearing system (3, 6) is not completely closed.

4. Device according to at least one of the claims 1 to 3, wherein said shearing blades (3a, 3b) are arranged to move at the same speed and to move with respect to each other with a phase difference comprised between 135° and 225°.

5. Device according to at least one of the claims 1 to 4, wherein said shearing blades (3a, 3b) are made of a stainless material, such as for example stainless steel or a plastic material.

6. Device according to at least one of the claims 1 to 5, wherein a first shearing blade (3a) is made of a metal and a second shearing blade (3b) is made of a plastic material.

7. Device according to claim 6, wherein said metal shearing blade (3a) is located at the side of the pressure chamber (2), and said plastic shearing blade (3b) is located at the opposite side.

8. Device according to at least one of the claims 1 to 7, provided with a clamping ring (18) in a recess (17) in the ground plane of the pressure chamber (2).

9. Device according to at least one of the claims 1 to 8, wherein said supply line (1), said pressure chamber (2) and said shearing system (3, 6) can be dismounted.

10. Device according to at least one of the claims 1 to 9, wherein said openings (6a, 6b) of said shearing blades (3a, 3b) are provided with an angle of 15° to 90°.

11. Kit for assembling a device according to at least one of the claims 1 to 10, comprising:
- a supply line (1);
- a pressure chamber (2) that can be connected to said supply line (1);
- a shearing system (3, 6) that can be connected to said pressure chamber (2), wherein said shearing system (3, 6) is comprised of two adjacent shearing blades (3a, 3b) with one or more round openings (6a, 6b), wherein said adjacent shearing blades (3a, 3b) are moveable with respect to each other;
- a motor (10) comprising a drive shaft (5);
**characterized in that** said adjacent shearing blades (3a, 3b) are eccentrically connected to said drive shaft.

12. Method for producing spherical food products with a device according to at least one of the claims 1 to 10, comprising the steps of:
- supplying a food material under pressure to a pressure chamber (2),
- guiding food material in said pressure chamber (2) through a shearing system (3, 6), wherein said shearing system (3, 6) comprises two shearing blades (3a, 3b) which are each provided with one or more round openings (6a, 6b) and which shearing blades (3a, 3b) move adjacently alongside one another in the plane of the shearing system (3, 6),
**characterized in that** said shearing blades (3a, 3b) carry out a harmonic movement wherein both blades move at the same speed and with a different phase with respect to each other.

13. Method according to claim 12, wherein said shearing blades (3a, 3b)move with respect to each other with a phase difference comprised between 135° and 225°.

14. Use of a device according to at least one of the claims 1 to 10, for producing spherical food products, such as for example meatballs.

## Patentansprüche

1. Vorrichtung zur Herstellung kugelförmiger Nahrungsmittelprodukte, umfassend eine Druckkammer (2), die an eine Zufuhrleitung (1) angeschlossen werden kann, und ein Schersystem (3, 6), das an die Druckkammer (2) angeschlossen werden kann, wobei
das Schersystem aus zwei benachbarten Scherblättern (3a, 3b) besteht, die jeweils eine oder mehrere runde Öffnungen (6a, 6b) umfassen, wobei die benachbarten Scherblätter (3a, 3b) im Verhältnis zueinander beweglich sind, **dadurch gekennzeichnet, dass** jedes Scherblatt (3a, 3b) an einen Exzenter (4a, 4b) angeschlossen ist, und jeder Exzenter (4a, 4b) durch einen Motor angetrieben werden kann.

2. Vorrichtung nach Anspruch 1, wobei die Druckkammer (2) über einen oder mehrere Führungskanäle (7a, 7b, 7c) an das Schersystem (3, 6) angeschlossen ist.

3. Vorrichtung nach Anspruch 1-2, wobei das Schersystem (3, 6) in jeder Position des Exzenters (4a, 4b) nicht vollständig geschlossen ist.

4. Vorrichtung nach mindestens einem der Ansprüche 1 bis 3, wobei die Scherblätter (3a, 3b) dafür angeordnet sind, sich mit gleicher Geschwindigkeit zu bewegen und sich im Verhältnis zueinander mit einer Phasenverschiebung zwischen 135° und 225° zu bewegen.

5. Vorrichtung nach mindestens einem der Ansprüche 1 bis 4, wobei die Scherblätter (3a, 3b) aus einem rostfreien Material bestehen, wie beispielsweise Edelstahl oder einem Kunststoff.

6. Vorrichtung nach mindestens einem der Ansprüche 1 bis 5, wobei ein erstes Scherblatt (3a) aus einem Metall besteht und ein zweites Scherblatt (3b) aus einem Kunststoff besteht.

7. Vorrichtung nach Anspruch 6, wobei sich das Metallscherblatt (3a) an der Seite der Druckkammer (2) befindet, und sich das Kunststoffscherblatt (3b) an der gegenüberliegenden Seite befindet.

8. Vorrichtung nach mindestens einem der Ansprüche 1 bis 7, ausgestattet mit einem Klemmring (18) in einer Vertiefung (17) in der Grundplatte der Druckkammer (2).

9. Vorrichtung nach mindestens einem der Ansprüche 1 bis 8, wobei die Zufuhrleitung (1), die Druckkammer (2) und das Schersystem (3, 6) zerlegt werden können.

10. Vorrichtung nach mindestens einem der Ansprüche 1 bis 9, wobei die Öffnungen (6a, 6b) der Scherblätter (3a, 3b) mit einem Winkel von 15° bis 90° bereitgestellt sind.

11. Bausatz zum Zusammenfügen einer Vorrichtung nach mindestens einem der Ansprüche 1 bis 10, umfassend:
- eine Zufuhrleitung (1),
- eine Druckkammer (2), die an die Zufuhrleitung (1) angeschlossen werden kann,
- ein Schersystem (3, 6), das an die Druckkammer (2) angeschlossen werden kann, wobei das Schersystem (3, 6) aus zwei benachbarten Scherblättern (3a, 3b) mit einer oder mehreren runden Öffnungen (6a, 6b) besteht, wobei die benachbarten Scherblätter (3a, 3b) im Verhältnis zueinander beweglich sind,
- einen Motor (10), der eine Antriebswelle (5) umfasst,
**dadurch gekennzeichnet, dass** die benachbarten Scherblätter (3a, 3b) exzentrisch an die Antriebswelle angeschlossen sind.

12. Verfahren zur Herstellung kugelförmiger Nahrungsmittelprodukte mit einer Vorrichtung nach mindestens einem der Ansprüche 1 bis 10, folgende Schritte umfassend:
- Führen eines Nahrungsmittelmaterials unter Druck zu einer Druckkammer (2),
- Leiten des Nahrungsmittelmaterials in der Druckkammer (2) durch ein Schersystem (3, 6), wobei das Schersystem (3, 6) aus zwei benachbarten Scherblättern (3a, 3b) besteht, die jeweils mit einer oder mehreren runden Öffnungen (6a, 6b) ausgestattet sind, und wobei sich die Scherblätter (3a, 3b) in der Ebene des Schersystems (3, 6) aneinander entlang bewegen,
**dadurch gekennzeichnet, dass** die Scherblätter (3a, 3b) eine harmonische Bewegung ausführen, wobei sich beide Blätter mit gleicher Geschwindigkeit und mit einer zueinander verschobenen Phase bewegen.

13. Verfahren nach Anspruch 12, wobei sich die Scherblätter (3a, 3b) im Verhältnis zueinander mit einer Phasenverschiebung zwischen 135° und 225° bewegen.

14. Verwendung einer Vorrichtung nach mindestens einem der Ansprüche 1 bis 10, zur Herstellung kugelförmiger Nahrungsmittelprodukte, wie beispielsweise Fleischbällchen.

## Revendications

1. Dispositif de production de produits alimentaires sphériques comprenant une chambre de pression (2) qui peut être connectée à une ligne d'alimentation (1) et un système de cisaillement (3, 6) qui peut être connecté à ladite chambre de pression (2), dans lequel ledit système de cisaillement est compris de deux lames de cisaillement adjacentes (3a, 3b), comprenant chacune une ou plusieurs ouvertures (6a, 6b), dans lequel lesdites lames de cisaillement adjacentes (3a, 3b) sont mobiles l'une par rapport à l'autre, **caractérisé en ce que** chaque lame de cisaillement (3a, 3b) est connectée à un excentrique (4a, 4b) et chaque excentrique (4a, 4b) peut être entraîné par un moteur.

2. Dispositif selon la revendication 1, dans lequel ladite chambre de pression (2) se connecte audit système de cisaillement (3, 6) via un ou plusieurs canaux de guidage (7a, 7b, 7c).

3. Dispositif selon les revendications 1 et 2, dans lequel, dans chaque position dudit excentrique (4a, 4b), le système de cisaillement (3, 6) n'est pas complètement fermé.

4. Dispositif selon au moins l'une des revendications 1 à 3, dans lequel lesdites lames de cisaillement (3a, 3b) sont agencées pour se déplacer à la même vitesse et se déplacer l'une par rapport à l'autre avec une différence de phase comprise entre 135° et 225°.

5. Dispositif selon au moins l'une des revendications 1 à 4, dans lequel lesdites lames de cisaillement (3a, 3b) sont réalisées en un matériau inoxydable, tel que par exemple l'acier inoxydable ou une matière plastique.

6. Dispositif selon au moins l'une des revendications 1 à 5, dans lequel une première lame de cisaillement (3a) est constituée d'un métal et une seconde lame de cisaillement (3b) est constituée d'une matière plastique.

7. Dispositif selon la revendication 6, dans lequel ladite lame de cisaillement métallique (3a) est située sur le côté de la chambre de pression (2), et ladite lame de cisaillement en matière plastique (3b) est située sur le côté opposé.

8. Dispositif selon au moins l'une des revendications 1 à 7, pourvu d'une bague de serrage (18) dans un évidement (17) dans le plan de masse de la chambre de pression (2).

9. Dispositif selon au moins l'une des revendications 1 à 8, dans lequel ladite ligne d'alimentation (1), ladite chambre de pression (2) et ledit système de cisaillement (3, 6) peuvent être démontés.

10. Dispositif selon au moins l'une des revendications 1 à 9, dans lequel lesdites ouvertures (6a, 6b) desdites lames de cisaillement (3a, 3b) sont pourvues d'un angle de 15° à 90°.

11. Kit d'assemblage d'un dispositif selon au moins l'une des revendications 1 à 10, comprenant :
- une ligne d'alimentation (1) ;
- une chambre de pression (2) qui peut être connectée à ladite ligne d'alimentation (1) ;
- un système de cisaillement (3, 6) qui peut être connecté à ladite chambre de pression (2), dans lequel ledit système de cisaillement (3, 6) est compris de deux lames de cisaillement adjacentes (3a, 3b) avec une ou plusieurs ouvertures rondes (6a, 6b), dans lequel lesdites lames de cisaillement adjacentes (3a, 3b) sont mobiles l'une par rapport à l'autre ;
- un moteur (10) comprenant un arbre d'entraînement (5) ;
**caractérisé en ce que** lesdites lames de cisaillement adjacentes (3a, 3b) sont reliées de manière excentrique audit arbre d'entraînement.

12. Procédé de fabrication de produits alimentaires sphériques avec un dispositif selon au moins l'une des revendications 1 à 10, comprenant les étapes consistant à :
- fournir un produit alimentaire sous pression à une chambre de pression (2),
- guider le produit alimentaire dans ladite chambre de pression (2) par l'intermédiaire d'un système de cisaillement (3, 6), dans lequel ledit système de cisaillement (3, 6) comprend deux lames de cisaillement (3a, 3b) qui sont munies chacune d'une ou plusieurs ouvertures rondes (6a, 6b) et lesquelles lames de cisaillement (3a, 3b) se déplacent de manière adjacente côte à côte dans le plan du système de cisaillement (3, 6),
**caractérisé en ce que** lesdites lames de cisaillement (3a, 3b) effectuent un mouvement harmonique dans lequel les deux lames se déplacent à la même vitesse et avec une phase différente l'une par rapport à l'autre.

13. Procédé selon la revendication 12, dans lequel lesdites lames de cisaillement (3a, 3b) se déplacent l'une par rapport à l'autre avec une différence de phase comprise entre 135° et 225°.

14. Utilisation d'un dispositif selon au moins l'une des revendications 1 à 10, pour la production de produits alimentaires sphériques, tels que des boulettes de viande, par exemple.
